(19) Europäisches Patentamt / European Patent Office / Office européen des brevets

(11) **EP 4 582 496 A2**

(12) **EUROPEAN PATENT APPLICATION**

(43) Date of publication:
**09.07.2025 Bulletin 2025/28**

(21) Application number: **25174111.2**

(22) Date of filing: **02.02.2021**

(51) International Patent Classification (IPC):
**C09D 7/63** (2018.01)

(52) Cooperative Patent Classification (CPC):
(C-Sets available)
**C09D 7/63; C09D 7/61; C09D 167/00;**
**C09D 167/02;** B21D 22/201; B21D 51/26;
C08K 3/011; C08K 5/0025        (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **03.02.2020 JP 2020016558**
**03.02.2020 JP 2020016563**

(62) Document number(s) of the earlier application(s) in
accordance with Art. 76 EPC:
**21751221.9 / 4 101 903**

(71) Applicant: **Toyo Seikan Group Holdings, Ltd.**
**Shinagawa-ku**
**Tokyo 141-8627 (JP)**

(72) Inventors:
• **SAKURAGI, Arata**
**Kanagawa, 240-0062 (JP)**

• **KASHIWAKURA, Takuya**
**Kanagawa, 240-0062 (JP)**
• **ZHANG, Nan**
**Kanagawa, 240-0062 (JP)**
• **YAMAMOTO, Hiromi**
**Kanagawa, 240-0062 (JP)**

(74) Representative: **Dehns**
**10 Old Bailey**
**London EC4M 7NG (GB)**

Remarks:
This application was filed on 02-05-2025 as a
divisional application to the application mentioned
under INID code 62.

(54) **COATING COMPOSITION, COATED METAL PLATE, AND DRAWN/IRONED CAN AND METHOD FOR PRODUCING SAME**

(57) A coating composition including a polyester resin blend as a principal resin, the polyester resin blend containing (A) a polyester resin having a glass transition temperature of higher than 40°C and an acid value of less than 10 mg KOH/g and (B) a polyester resin having a glass transition temperature of higher than 40°C and an acid value of 10 mg KOH/g or more and less than 50 mg KOH/g, and (C) a curing agent. Alternatively, a coating composition containing a polyester resin, as a principal resin, having a glass transition temperature of 60°C or higher, a resol-type phenol resin and/or an amino resin as a curing agent, and an organic sulfonic acid-based catalyst and/or a phosphoric acid-based catalyst as a curing catalyst, in which a content of the curing catalyst is less than 0.2 part by mass per 100 parts by mass of the principal resin. Provided is a coating composition that can manufacture a coated metal sheet and a drawn and ironed can, which have can making processability, substrate adhesion properties, and flavor sorption resistance all together.

EP 4 582 496 A2

(52) Cooperative Patent Classification (CPC): (Cont.)

C-Sets
**C09D 167/00, C08L 67/02, C08L 61/00;**
**C09D 167/02, C08L 67/00, C08L 61/00**

**Description**

[Technical Field]

The present invention relates to a coating composition and a coated metal sheet coated with the same. Further, the present invention also relates to a drawn and ironed can using the coated metal sheet and a manufacturing method of the same.

[Background Art]

As a processing process for manufacturing seamless cans widely used as beverage cans and the like, drawing and ironing processing is known. This drawing and ironing processing is a processing process that punches a metal sheet such as an aluminum sheet or a steel sheet into a circular shape, applies drawing processing to the resulting blank to form it into a cylindrical cup composed of a body portion having a seamless side wall and a base portion seamlessly and integrally connected with the body portion, and then applies ironing processing to thin the container body portion, and the seamless can obtained by this process is called a "drawn and ironed can."

Known as a manufacturing method of this drawn and ironed can includes, for example, a process that uses, as a metal sheet, a laminated metal sheet with a thermoplastic resin film of polyethylene terephthalate or the like applied thereto beforehand. As the thermoplastic resin film has lubricating function, this process enables to perform drawing and ironing processing under dry conditions without using a liquid coolant (water-based lubricant), and therefore has the merit of contributing to a reduction in environmental load compared with the conventional case in which the drawing and ironing processing is performed using a liquid coolant. On the other hand, problems in economy arose in some instances because the thermoplastic resin films in laminated metal sheets for use in this process have a certain thickness or greater for the sake of convenience in forming the films.

Proposed as countermeasures to the above-described process are processes that manufacture a drawn and ironed can by subjecting a coated metal sheet to drawing and ironing processing (PTL 1). According to these processes, when drawing and ironing processing is applied to a metal sheet with a film (coating film) formed thereon by coating, the drawing and ironing processing is feasible under dry conditions because the coating film has lubricating function. In addition, these processes are also superior in economy when the coating film is formed as a thin film.

[Citation List]

[Patent Literature]

[PTL 1]
Japanese Patent No. 3872998
[PTL 2]
Japanese Patent No. 4091266

[Summary]

[Technical Problems]

Among the above-proposed manufacturing methods of drawn and ironed cans by using coated metal sheets, however, none have yet been found to be sufficiently satisfactory from viewpoints of can making processability and substrate adhesion properties of the coating film, flavor sorption resistance of contents, and the like.

Described specifically, it is required in drawing and ironing processing that no coating film defect occurs during can making processing (can making processability) and a coating film does not peel off from a substrate (substrate adhesion properties).

Moreover, the flavor of contents changes if flavor components (aroma components) such as limonene contained in the contents undergo sorption on the coating film when the contents are filled in a container manufactured by such drawing and ironing processing as descried above. As a coating film on a side of a can interior surface, the coating film is therefore required not to cause the sorption (flavor sorption resistance).

The present inventors have conducted a diligent study to solve the above-described problems. As a result, it has been found that, in a coating composition containing a polyester resin, a curing agent, and a curing catalyst, the above-described problems can be solved together at high levels by (1) using polyester resins of different acid values in combination and also setting the glass transition temperatures of the individual resins at a predetermined temperature or higher, or (2) using a polyester resin having a glass transition temperature of a predetermined temperature or higher and also setting the amount of the curing catalyst, which is to be blended to promote the crosslinking reaction between the polyester resin and the curing agent, at less than a predetermined amount, thereby conceiving the present invention.

[Solution to Problems]

To achieve the above-described objects, (1) a coating composition according to an embodiment of the present invention includes a polyester resin blend as a principal resin, the polyester resin blend containing (A) a polyester resin having a glass transition temperature of higher than 40°C and an acid value of less than 10 mg KOH/g and (B) a polyester resin having a glass transition temperature of higher than 40°C and an acid value of 10 mg KOH/g or more and less than 50 mg KOH/g, and (C) a curing agent.

In (1) described above, (2) an average acid value of the polyester resin blend is preferably more than 2.0 mg KOH/g and less than 16.0 mg KOH/g.

In (1) or (2) described above, (3) a glass transition temperature of the polyester resin blend is preferably 50°C to 120°C.

In any of (1) to (3) described above, (4) a blend ratio of the polyester resin (A)/the polyester resin (B) in the polyester resin blend is preferably 30/70 to 99/1 in terms of solid content mass ratio.

In any of (1) to (4) described above, (5) the curing agent (C) is preferably a resol-type phenol resin.

In any of (1) to (5) described above, (6) a content of the curing agent (C) is preferably 5.5 parts by mass or more per 100 parts by mass of the principal resin (polyester resin blend).

In any of (1) to (6) described above, (7) a number average molecular weight of the polyester resin (A) is preferably 13,000 or more, and a number average molecular weight of the polyester resin (B) is preferably less than 13,000.

Also, to achieve the above-described objects, (8) a coating composition according to another embodiment of the present invention includes a polyester resin having, as a principal resin, a glass transition temperature of 60°C or higher, a resol-type phenol resin and/or an amino resin as a curing agent, and an organic sulfonic acid-based catalyst and/or a phosphoric acid-based catalyst as a curing catalyst. A content of the curing catalyst is 0.2 part by mass or less per 100 parts by mass of the principal resin.

In (8) described above, (9) a content of the curing catalyst is preferably 0.1 part by mass or less per 100 parts by mass of the principal resin.

In (8) or (9) described above, (10) an acid value of the principal resin is preferably less than 20 mg KOH/g.

In any of (8) to (10) described above, (11) a content of the curing agent is preferably 4 to 30 parts by mass per 100 parts by mass of the principal resin.

In any of (1) to (11) described above, (12) the coating composition is preferably a solvent-based coating composition.

Also, to achieve the above-described objects, (13) a coated metal sheet according to an embodiment of the present invention includes, on at least one side of a metal sheet, a coating film formed from the coating composition described above in any of (1) to (12).

Also, to achieve the above-described objects, (14) a coated metal sheet according to a further embodiment of the present invention for a drawn and ironed can includes, on a metal surface of at least one side of a metal sheet, a coating film formed from the coating composition described above in any of (1) to (12).

In (14) described above, (15) a 180-degree peel strength of the coating film is preferably 1 N/15 mm or more.

(16) A drawn and ironed can of this embodiment is formed from the coated metal sheet described above in (13).
(17) A drawn and ironed can of this embodiment is formed from the coated metal sheet described above in (14) or (15).

In (16) or (17) described above, (18) a thickness of the coating film on a central area of an interior surface and/or an exterior surface of a side wall of a can body is preferably 20 to 75% of a thickness of the coating film on a can base portion.

(19) A manufacturing method of this embodiment for a drawn and ironed can includes subjecting the coated metal sheet described above in (13), (14) or (15) to drawing and ironing processing at an ironing ratio of 25 to 80%.

[Advantageous Effect of Invention]

According to the coating compositions of the present invention, it is possible to provide coated metal sheets for drawn and ironed cans, which have can making processability, substrate adhesion properties, and flavor sorption resistance all together.

[Brief Description of Drawings]

[FIG. 1]

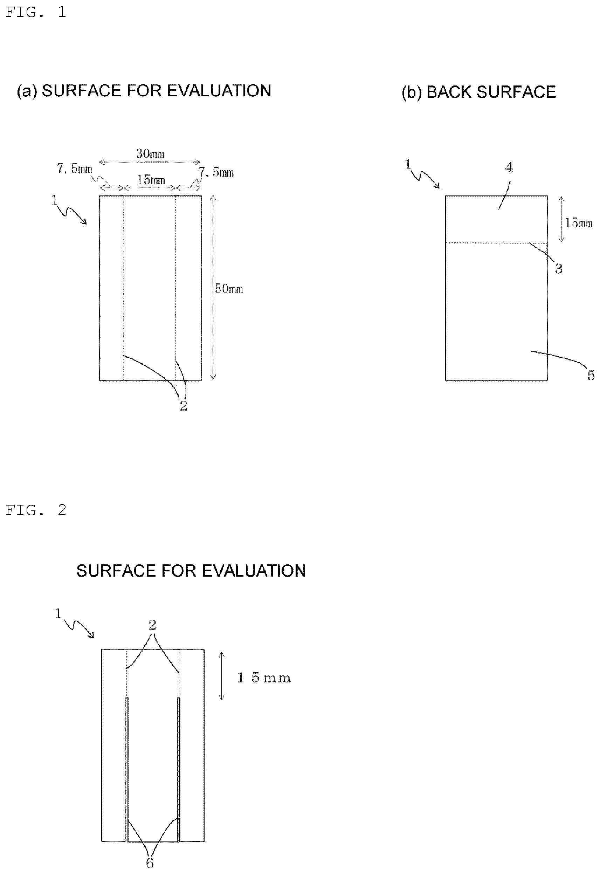

FIG. 1 depicts explanatory diagrams for measurement of 180-degree peel strength.
[FIG. 2]
FIG. 2 is an explanatory diagram for the measurement of 180-degree peel strength.
[FIG. 3]

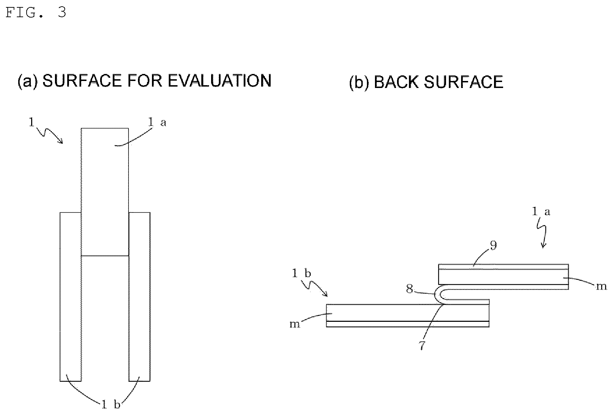

FIG. 3 depicts explanatory diagrams for the measurement of 180-degree peel strength.

[Description of Embodiments]

<Coating Compositions>

Using embodiments, a description will hereinafter be made about coating compositions of the present invention, although the present invention should not be limited to the following embodiments.

[First Embodiment]

The coating composition of this embodiment is characterized in that it contains a principal resin and a curing agent. Described specifically, a coating film having heat resistance is formed using polyester resins as the principal resin and crosslinking the principal resin with the curing agent.

<Principal Resin>

In this embodiment, the principal resin is a polyester resin blend containing (A) a polyester resin having a glass transition temperature of higher than 40°C and an acid value of less than 10 mg KOH/g and (B) a polyester resin having a glass transition temperature of higher than 40°C and an acid value of 10 mg KOH/g or more and less than 50 mg KOH/g. This is attributed to the following reasons.

First, to satisfy both can making processability and substrate adhesion properties out of the problems in the present invention, there is a need to set the acid value (the number of carboxyl groups) of a polyester resin at a predetermined value. Described specifically, if the acid value of a resin is high, the crosslink density increases, so that the can making processability is lowered. If the acid value of a resin is low, on the other hand, the can making processability is improved, but the acid-base interaction between the surface of a substrate (for example, aluminum) and the carboxyl groups in the resin is reduced, leading to a reduction in adhesion between a coating film and the substrate.

As a result of a trial-and-error endeavor by the present inventors for the formation of a coating film having both can making processability and substrate adhesion properties in good balance, it came to blend polyester resins of different acid values into a principal resin as described above. Described specifically, it is inferred that the blending of the polyester resin (A) of the relatively low acid value and the polyester resin (B) of the relatively high acid value into the principal resin can provide the resulting coating film with both the characteristic of excellent can making processability derived from the polyester resin (A) and the characteristic of superb substrate adhesion properties derived from the polyester resin (B), thereby enabling to satisfy both can making processability and substrate adhesion properties although they can hardly be satisfied together by a coating film formed from a single principal resin.

In order to efficiently exhibit the above-described advantageous effect, it is suited to use, as the polyester resin (A), a polyester resin having an acid value in a range of less than 10 mg KOH/g, preferably 0.5 to 6 mg KOH/g, more preferably 1 to 4 mg KOH/g, and as the polyester resin (B), a polyester resin having an acid value in a range of 10 mg KOH/g or more and less than 50 mg KOH/g, preferably 11 to 40 mg KOH/g, more preferably 12 to 25 mg KOH/g.

The present inventors next repeated experiments on flavor sorption resistance out of the problems in the present invention, and as a result, found the existence of a correlation between the glass transition temperature and the flavor sorption resistance of a resin. Described specifically, it was found that the adsorption rate of an aroma component contained in contents can be reduced if the glass transition temperatures of the polyester resin (A) and the polyester resin (B) used as the principal resins are each a predetermined temperature or higher.

Here, the reason for the existence of the correlation between glass transition temperature and flavor sorption resistance is presumed to be as follows. Described specifically, it is considered that the use of a polyester resin, the glass transition temperature of which is lower than the predetermined temperature, as the polyester resin (A) and/or the polyester resin (B) leads to an increase in the mobility of the resin, a flavor component is hence facilitated to spread inside the coating film, and as a result, the flavor component undergoes more abundant sorption on the coating film.

The present inventors therefore thought that it would be possible to improve the flavor sorption resistance by controlling the glass transition temperature, and decided to control the glass transition temperature of the polyester resin in this embodiment.

From the foregoing, in order to satisfy can making processability, substrate adhesion properties, and flavor sorption resistance all together at high levels, this embodiment is characterized by the polyester resin blend containing (A) the polyester resin having the glass transition temperature of higher than 40°C and the acid value of less than 10 mg KOH/g and (B) the polyester resin having the glass transition temperature of higher than 40°C and the acid value of 10 mg KOH/g or more and less than 50 mg KOH/g.

As the blend, the principal resin, in this embodiment, the range of its average acid value ($AV_{mix}$) as the sum of values obtained by multiplying the acid values and the mass fractions of the individual polyester resins is preferably more than 2.0 mg KOH/g and less than 16.0 mg KOH/g, preferably 2.0 to 12.0 mg KOH/g, more preferably 2.5 to 8.0 mg KOH/g. If the average acid value of the blend is 2.0 mg KOH/g or less, substrate adhesion properties may not be ensured for the coating film when a drawn and ironed can is manufactured. Such a small average acid value is therefore not preferred. If the average acid value of the blend is 16.0 mg KOH/g or more, on the other hand, the coating film may be provided with insufficient can making processability. Such a large average acid value is therefore not preferred either.

As the glass transition temperature ($Tg_{mix}$) of the polyester resin blend, the principal resin, in this embodiment, a range of 50°C and higher, preferably 60°C and higher, more preferably 60°C to 120°C, still more preferably 65°C to 100°C, particularly preferably 65°C to 90°C is desired. If the glass transition temperature of the blend is lower than the above-described range, a flavor component (aroma component) such as limonene contained in contents is prone to sorption on the coating film after the manufacture of a drawn and ironed can. Such a low glass transition temperature is therefore not preferred. If the glass transition temperature of the blend exceeds 120°C, on the other hand, can making properties are insufficient, so that a coating film defect occurs during can making. Such an excessively high glass transition temperature is therefore not preferred either.

The glass transition temperatures of the individual polyester resins (A) and (B) may be different or the same insofar as they both exceed 40°C as mentioned above.

It is to be noted that the glass transition temperature of the blend is calculated according to the following equation (1).

$$1/Tg_{mix} = (W1/Tg1) + (W2/Tg2) + \ldots + (Wm/Tgm) \ldots$$

$$(1)$$

$$W1 + W2 + \ldots + Wm = 1$$

in which $Tg_{mix}$ represents the glass transition temperature (K) of the polyester resin blend, and Tg1, Tg2, ..., Tgm represent the glass transition temperatures (K) of the individual polyester resins (polyester resin 1, polyester resin 2, ..., polyester resin m) themselves. Further, W1, W2, ..., Wm represent the mass fractions of the individual polyester resins (polyester resin 1, polyester resin 2, ..., polyester resin m).

As a measurement method of each glass transition temperature, a known method can be applied. Using a differential scanning calorimeter (DSC), for example, measurement can be performed at a ramp up rate of 10°C/min.

As the blend ratio of the polyester resin (A)/the polyester resin (B) in the polyester resin blend as the principal resin in this embodiment, a range of 30/70 to 99/1, preferably 40/60 to 98/2, more preferably 50/50 to 98/2, still more preferably 70/30 to 97/3, particularly preferably 80/20 to 95/5, in terms of solid content mass ratio, is desired.

In this embodiment, as the polyester resin (A) having the glass transition temperature of higher than 40°C and the acid value of less than 10 mg KOH/g and the polyester resin (B) having the glass transition temperature of higher than 40°C and the acid value of 10 mg KOH/g or more and less than 50 mg KOH/g, they can be selected from known polyester resins useful in general coating compositions.

As the polycarboxylic acid components that constitute the polyester resin (A) and the polyester resin (B), no particular limitation is imposed on the monomer components forming the polyester resins insofar as they are monomers commonly used in the polymerization of polyester resins. Illustrative are aromatic dicarboxylic acids such as terephthalic acid, isophthalic acid, orthophthalic acid, and naphthalenedicarboxylic acid, aliphatic dicarboxylic acids such as succinic acid, glutaric acid, adipic acid, azelaic acid, sebacic acid, dodecanedioic acid, and dimeric acid, unsaturated dicarboxylic acids such as maleic acid (anhydride), fumaric acid, and terpene-maleic acid adduct, alicyclic dicarboxylic acids such as 1,4-cyclohexanedicarboxylic acid, tetrahydrophthalic acid, hexahydroisophthalic acid, and 1,2-cyclohexenedicarboxylic acid, trivalent and higher polyvalent carboxylic acids such as trimellitic acid (anhydride), pyromellitic acid (anhydride), and methylcyclohexenetricarboxylic acid, and the like. From these, two or more polycarboxylic acid components can be selected and used. Of the polycarboxylic acid components described above, terephthalic acid, isophthalic acid, adipic acid, sebacic acid, and 1,4-dyclohexanedicarboxylic acid can be suitably used as components that constitute the polyester resins.

In this embodiment, the percentage of aromatic dicarboxylic acids such as terephthalic acid, isophthalic acid, and naphthalenedicarboxylic acid in the polycarboxylic acid components which constitute the polyester resin (A) and/or the polyester resin (B) may be preferably 80 mol% or more, more preferably 80 to 100 mol%, still more preferably 90 to 100% from viewpoints of flavor sorption resistance, corrosion resistance, retort resistance, and the like. Further, linear aliphatic dicarboxylic acids having carbon numbers greater than 6, such as adipic acid, azelaic acid, sebacic acid, and dodecanedioic acid, may be contained in the remaining percentage other than the above-described aromatic dicarboxylic acids, specifically in an amount of 20 mol% or less, but the linear aliphatic dicarboxylic acids having the carbon numbers greater than 6 have high affinity with a hydrophilic flavor component such as limonene, and tend to cause its sorption. A coating film is therefore deteriorated in flavor sorption property if the coating film is formed using polyester resins, which abundantly contain linear aliphatic dicarboxylic acids having carbon numbers greater than 6, as polycarboxylic acid components that constitute the polyester resins. It is therefore desired that the percentage of linear aliphatic dicarboxylic acids having carbon numbers of greater than 6 in the polycarboxylic acid components that constitute the polyester resin (A) and/or the polyester resin (B) be less than 20 mol%, preferably less than 10 mol%, more preferably less than 7 mol%, still more preferably less than 5 mol%. In the blend of the polyester resins, it is desired that the percentage of linear aliphatic dicarboxylic acids having carbon numbers greater than 6 in all the polycarboxylic acid components that constitute the polyester resin blend be less than 20 mol%, preferably less than 10 mol%, more preferably less than 7 mol%, still more preferably less than 5 mol%.

As the polyhydric alcohol components that constitute the polyester (A) and polyester (B), it is possible to use, with no particular limitation, one or a combination of two or more of aliphatic glycols such as ethylene glycol, propylene glycol (1,2-propanediol), 1,3-propanediol, 1,4-butanediol, 1,2-butanediol, 1,3-butanediol, 2-methyl-1,3-propanediol, neopentyl glycol, 1,5-pentanediol, 1,6-hexanediol, 3-methyl-1,5-pentanediol, 2-ethyl-2-butyl-1,3-propanediol, 2,4-diethyl-1,5-pentanediol, 1-methyl-1,8-octanediol, 3-methyl-1,6-hexanediol, 4-methyl-1,7-heptanediol, 4-methyl-1,8-octanediol, 4-propyl-1,8-octanediol, and 1,9-nonanediol, ether glycols such as diethylene glycol, triethylene glycol, polyethylene glycol, polypropylene glycol, and polytetramethylene glycol, alicyclic polyols such as 1,4-cylohexanedimethanol, 1,3-cylohexanedimethanol, 1,2-cylohexanedimethanol, tricyclodecane glycols, and hydrogenated bisphenols, trivalent and higher polyols such as trimethylolpropane, trimethylolethane, and pentaerythritol, and the like. Of the polyhydric alcohol components described above, ethylene glycol, propylene glycol, neopentyl glycol, diethylene glycol, 1,4-butanediol, 1,4-cyclohexanedimethanol, and 2-methyl-1,3-propanediol can be suitably used in this embodiment as the components that constitute the polyester resins.

In this embodiment, it is also desired from the viewpoint of flavor sorption resistance that the percentage of at least one polyhydric alcohol, which is selected from ethylene glycol, propylene glycol, neopentyl glycol, 2-methyl-1,3-propanediol, and 1,4-cyclohexanedimethanol, in the polyhydric alcohol component that constitutes the polyester resin (A) and/or the polyester resin (B) be 70 mol% or more, preferably 80 mol% or more, more preferably 90 mol% or more.

In the principal resin in this embodiment, it is preferred from the viewpoint of can making processability that the number average molecular weight of the above-described polyester resin (A) be 13,000 or more and the number average molecular weight of the above-described polyester resin (B) be less than 13,000.

Further, as the polyester resins, noncrystalline polyester resins are preferred from the viewpoints of can making processability, dent resistance, and formulation into coating compositions. Here, the term "noncrystalline" means that the distinct melting point of a crystalline component is not indicated in measurement by a differential scanning calorimeter. In the case of noncrystalline polyester resins, they have excellent solubility in solvents compared with crystalline polyester resins, and therefore are easy in formulating a coating composition and can form coating films excellent in can making processability and dent resistance.

The hydroxyl values of the polyester resins are, but are not limited to, 20 mg KOH/g or less, more preferably 10 mg KOH/g or less.

<Curing Agent>

A description will next be made about the curing agent for use in the coating composition of this embodiment. As the curing agent (C) for use in this embodiment, a resol-type phenol resin and/or an amino resin can be suitably used from viewpoints of hygiene and curability.

In this embodiment, the term "resol-type phenol resin" means one obtained by reacting a phenol monomer and formaldehyde in the presence of an alkali catalyst. Examples of the phenol monomer include o-cresol, p-cresol, p-tert-butylphenol, p-ethylphenol, 2,3-xylenol, 2,5-xylenol, phenol, m-cresol, m-ethylphenol, 3,5-xylenol, m-methoxyphenol, and the like. They can be used singly or in combination. Of these, m-cresol is suited as the phenol monomer from the viewpoint of curability.

Also usable are those obtained by alkyl-etherifying (alkoxymethylating) some or all of the contained methylol groups with alcohols having carbon numbers of 1 to 12. In this embodiment, one obtained by alkyl-etherifying some or all of the contained methylol groups with an alcohol having a carbon number of 1 to 12 can be suitably used from points of reactivity and compatibility with the principal resin, with one obtained by alkyl-etherifying, with n-butanol, methylol groups of a resol-type phenol resin (m-cresol resol-type phenol resin) derived from m-cresol being particularly preferred.

Further, the number average molecular weight (Mn) of the above-described resol-type phenol resin is suitably in a range of 500 to 3,000, preferably 800 to 2,500.

As the amino resin in this embodiment, illustrative are methylolated amino resins obtained by reactions between amino components such as melamine, urea, benzoguanamine, acetoguanamine, steroguanamine, spiroguanamine, and dicyandiamide and aldehyde components such as formaldehyde, paraformaldehyde, acetoaldehyde, and benzaldehyde. Those obtained by alkyl-etherifying methylol groups of these methylolated amino resins with alcohols having carbon numbers of 1 to 6 are also included in the above-described amino resin. They can be used singly or in combination. From the viewpoint of hygiene, particularly preferred are methylolated amino resins (melamine resins) using melamine and methylolated amino resins (benzoguanamine resins) using benzoguanamine.

As the benzoguanamine resins, preferred are benzoguanamine resins obtained by alkyl-etherifying some or all of the methylol groups of benzoguanamine resins with alcohols such as methanol, ethanol, n-butanol, and i-butanol, with methyl-etherified benzoguanamine resins obtained by etherifying with methyl alcohol, butyl-etherified benzoguanamine resins obtained by butyl-etherifying with butyl alcohol, or methyl ether-butyl ether mixed etherified benzoguanamine resins etherified with both methyl alcohol and butyl alcohol being particularly preferred. As the butyl alcohol described above, isobutyl alcohol or n-butyl alcohol are preferred.

As the melamine resins, preferred are melamine resins obtained by alkyl-etherifying some or all of the methylol groups of melamine resins with alcohols such as methanol, ethanol, n-butanol, and i-butanol, with methyl-etherified melamine resins obtained by etherifying with methyl alcohol, butyl-etherified melamine resins obtained by butyl-etherifying with butyl alcohol, or methyl ether-butyl ether mixed etherified melamine resins etherified with both methyl alcohol and butyl alcohol being particularly preferred.

It is to be noted that as the curing agent (C) for use in the coating composition of this embodiment, the resol-type phenol resin out of those described above is particularly preferred from the viewpoints of the can manufacturing processability, heat resistance, and the like of the coating film.

In this embodiment, the content of the curing agent is 5.5 parts by mass or more, preferably 6 to 40 parts by mass, more preferably 7 to 30 parts by mass, still more preferably 8 to 20 parts by mass per 100 parts by mass of the polyester resin blend as the principal resin. If the content of the curing agent is less than the above-described range, curability is insufficient, so that, when a drawn and ironed can is formed, the coating film may be insufficient in heat resistance, retort resistance, contents resistance, corrosion resistance, and the like. Such a small content is therefore not preferred. If the content of the curing agent exceeds 40 parts by mass, curing proceeds excessively, thereby bringing about potential reductions in the can making processability and impact resistance of the coating film.

<Curing Catalyst>

Preferably, a conventionally known curing catalyst is blended in the coating composition of this embodiment to promote the crosslinking reaction between the principal resin and the curing agent. As the curing agent, a conventionally-known curing catalyst for use in coating compositions can be used. Specifically, acid catalysts, such as p-toluenesulfonic acid, dodecylbenzenesulfonic acid, dinonylnaphthalenesulfonic acid, camphorsulfonic acid, phosphoric acid, and alkylphosphoric acids, and amine-neutralized products of these acid catalysts can be exemplified. One of these curing catalysts can be used, or two or more of them can be used in combination. Among the acid catalysts described above, dodecylbenzenesulfonic acid and its neutralized products are preferred as the curing catalyst.

Desirably, the content of the curing catalyst is in a range of 0.01 to 5.0 parts by mass, preferably 0.02 to 1.0 part by mass, more preferably 0.03 to 0.5 part by mass, still more preferably 0.03 part by mass or more and less than 0.3 part by mass, in terms of solids, per 100 parts by mass of the solids in the polyester resins. If one of the above-described amine-neutralized products of the acid catalysts (for example, an amine-neutralized product of dodecylbenzenesulfonic acid) is used as the curing catalyst, the content of the acid catalyst except for the amine should fall within the above-described range. If the content of the curing catalyst is less than the above-described range, the curing reaction promoting effect available from the blending of the curing catalyst cannot be obtained sufficiently. If the blend amount of the curing catalyst is more than the above-described range, on the other hand, no enhancement of the effect is expected, but on the contrary, the waterproofness of the coating film may deteriorate.

<Coating Composition>

The coating composition of this embodiment contains at least the above-mentioned specific polyester resins as the principal constituent (principal component), a resol-type phenol resin and/or an amino resin as the curing agent, a solvent, and if necessary, an acid catalyst. It is to be noted that, in the coating composition of this embodiment, the component the content of which (percentage by mass) is the highest among solid components (non-volatile components other than volatile substances such as water and solvent) that will form a coating film is defined as a principal constituent (principal component).

As the type of the coating composition of this embodiment, illustrative are a solvent-based coating composition and an aqueous coating composition. In this embodiment, the solvent-based coating composition is preferred from a viewpoint of coating applicability or the like.

<Solvent>

If the coating composition of this embodiment is a solvent-based coating composition, it contains the above-mentioned polyester resins and curing agent, and as the solvent, an organic solvent. It is to be noted that the term "solvent-based coating composition" in this embodiment is one formulated into a coating composition with the principal resin, curing agent, and the like dissolved in a known organic solvent, and is defined to be a coating composition in which the mass percentage of the organic solvent is 40 mas% or more.

As the above-described organic solvent, one or more organic solvents are selected and used in view of solubility, evaporation rate, and the like from toluene, xylene, aromatic hydrocarbon compounds, ethyl acetate, butyl acetate, methyl ethyl ketone, methyl isobutyl ketone, cyclohexanone, isophorone, methyl cellosolve, butyl cellosolve, ethylene glycol monoethyl ether acetate, diethylene glycol monoethyl ether acetate, ethylene glycol monoacetate, methanol, ethanol, butanol, ethylene glycol monoethyl ether, ethylene glycol monobutyl ether, diethylene glycol monobutyl ether, solvent naphtha, and the like.

<Additives>

In the coating composition of this embodiment, known additives may also be contained to extent not impairing the objects of the present invention. For example, a lubricant, a pigment, a leveling agent, a defoaming agent, and the like may be contained.

Examples of the lubricant that can be added to the coating composition include, but are not particularly limited to, fatty acid ester waxes as esterified products of polyol compounds and fatty acids, silicon-based waxes, fluorinated waxes such as polytetrafluoroethylene, polyolefin waxes such as polyethylene, paraffin waxes, lanolin, montan wax, microcrystalline waxes, carnauba wax, silicon-containing compounds, vaseline, and the like. These lubricants can be used singly or in combination.

[Second Embodiment]

The present invention will next be described further based on a second embodiment to be described below.

A coating composition of this embodiment is characterized in that it contains a principal resin, a curing agent, and a curing catalyst. Described specifically, the coating composition of this embodiment contains a polyester resin having a glass transition temperature (Tg) of 60°C or higher as the principal resin, a resol-type phenol resin and/or an amino resin as the curing agent, and an organic sulfonic acid-based and/or a phosphoric acid-based catalyst as the curing catalyst.

<Principal Resin>

In this embodiment, the principal resin is characterized in that it is the polyester resin having the glass transition temperature of 60°C or higher. Its reason is as follows.

When contents are filled in a can container manufactured by such drawing and ironing processing as described above, the flavor of the contents changes if a flavor component (aroma component) such as limonene contained in the contents undergoes sorption on a coating film. As a coating film on a side of a can interior surface, it is therefore required not to cause such sorption (flavor sorption resistance).

If the glass transition temperature of the polyester resin is lower than 60°C, the resin has high mobility, so that the flavor component is facilitated to spread inside the coating film, the flavor component may undergo more pronounced sorption on the coating film, the flavor sorption resistance may be reduced, and in addition, the corrosion resistance and retort resistance may also be reduced. Such a low glass transition temperature is therefore not preferred.

It is to be noted that the glass transition temperature of the polyester resin is desirably in a range of 60°C and higher, preferably 60°C to 120°C, more preferably higher than 65°C and 120°C or lower, still more preferably 67°C to 100°C, particularly preferably 70°C to 90°C.

In this embodiment, the polyester resin as the principal resin may be a blend of a plurality of polyester resins of different glass transition temperatures. If this is the case, $Tg_{mix}$ of the polyester resin blend as calculated according to the below-described equation (1) may desirably be in a range of 60°C and higher, preferably 60°C to 120°C, more preferably higher than 65°C and 120°C or lower, still more preferably 67°C to 100°C, particularly preferably 70°C to 90°C.

$$1/Tg_{mix} = (W1/Tg1) + (W2/Tg2) + ... + (Wm/Tgm) ... (1)$$

$$W1 + W2 + ... + Wm = 1$$

in which $Tg_{mix}$ represents the glass transition temperature (K) of the polyester resin blend, and Tg1, Tg2, ..., Tgm represent the glass transition temperatures (K) of the used individual polyester resins (polyester resin 1, polyester resin 2, ..., polyester resin m) themselves. Further, W1, W2, ..., Wm represent the weight fractions of the individual polyester resins (polyester resin 1, polyester resin 2, ..., polyester resin m).

As a measurement method of glass transition temperature, a known method can be applied. Using a differential scanning calorimeter (DSC), for example, measurement can be performed at a ramp up rate of 10°C/min.

The acid value of the polyester resin as the principal resin in this embodiment is desirably in a range of less than 20 mg KOH/g, more preferably 15 mg KOH/g or less, more preferably 0.5 to 11.5 mg KOH/g. If the acid value of the polyester resin is 20 mg KOH/g or more, there are more reaction points with the curing agent, so that the coating film has a higher crosslink density. Preferred can making processability may therefore not be obtained at the time of manufacture of a drawn and ironed can. Such a high acid value is therefore not preferred.

It is to be noted that, if the principal resin is a blend prepared by blending two or more polyester resins, it is sufficient if the sum of values obtained by multiplying the acid values of the individual polyester resins and their mass fractions is used as the average acid value ($AV_{mix}$) of the blend and the average acid value falls within the above-mentioned acid value range.

In this embodiment, as the polycarboxylic acid component that constitutes the polyester resin as the principal resin, illustrative are aromatic dicarboxylic acids such as terephthalic acid, isophthalic acid, orthophthalic acid, and naphthalenedicarboxylic acid, aliphatic dicarboxylic acids such as succinic acid, glutaric acid, adipic acid, azelaic acid, sebacic acid, dodecanedioic acid, and dimeric acid, unsaturated dicarboxylic acids such as maleic acid (anhydride), fumaric acid, and terpene-maleic acid adduct, alicyclic dicarboxylic acids such as 1,4-cyclohexanedicarboxylic acid, tetrahydrophthalic acid, hexahydroisophthalic acid, and 1,2-cyclohexenedicarboxylic acid, trivalent and higher polyvalent carboxylic acids such as trimellitic acid (anhydride), pyromellitic acid (anhydride), and methylcyclohexenetricarboxylic acid, and the like. From these, one or more polycarboxylic acid components can be selected and used.

In this embodiment, the percentage of an aromatic dicarboxylic acid such as terephthalic acid, isophthalic acid, or naphthalenedicarboxylic acid in the polycarboxylic acid component which constitutes the polyester resin may be preferably 80 mol% or more, more preferably 80 to 100 mol%, particularly preferably 90 to 100 mol% from the viewpoints of flavor sorption resistance, corrosion resistance, retort resistance, and the like.

Further, a linear aliphatic dicarboxylic acid having a carbon number greater than 6, such as adipic acid, azelaic acid, sebacic acid, or dodecanedioic acid, may be contained in the remaining percentage other than the above-described aromatic dicarboxylic acid, specifically in an amount of 20 mol% or less, but the linear aliphatic dicarboxylic acid having the carbon number greater than 6 has high affinity with a hydrophilic flavor component such as limonene, and tends to cause its sorption. A coating film is therefore deteriorated in flavor sorption property if the coating film is formed using a polyester resin, which abundantly contains a linear aliphatic dicarboxylic acid having a carbon number greater than 6, as a polycarboxylic acid component that constitutes the polyester resin. It is therefore desired that the percentage of a linear aliphatic dicarboxylic acid having a carbon number greater than 6 in the polycarboxylic acid component that constitutes the polyester resin be less than 20 mol%, preferably less than 10 mol%, more preferably less than 7 mol%, still more preferably less than 5 mol%.

It is also desired that, if the polyester resin is a blend prepared by blending two or more polyester resins, the percentage of linear aliphatic dicarboxylic acids having carbon numbers greater than 6 in all the polycarboxylic acid components that constitute the polyester resin blend be less than 20 mol%, preferably less than 10 mol%, more preferably less than 7 mol%, still more preferably less than 5 mol%.

As the polyhydric alcohol component or components that constitute the polyester resin or resins, on the other hand, it is possible to use, with no particular limitation, one or a combination of two or more of aliphatic glycols such as ethylene glycol, propylene glycol (1,2-propanediol), 1,3-propanediol, 1,4-butanediol, 1,2-butanediol, 1,3-butanediol, 2-methyl-1,3-propanediol, neopentyl glycol, 1,5-pentanediol, 1,6-hexanediol, 3-methyl-1,5-pentanediol, 2-ethyl-2-butyl-1,3-propanediol, 2,4-diethyl-1,5-pentanediol, 1-methyl-1,8-octanediol, 3-methyl-1,6-hexanediol, 4-methyl-1,7-heptanediol, 4-methyl-1,8-octanediol, 4-propyl-1,8-octanediol, and 1,9-nonanediol, ether glycols such as diethylene glycol, triethylene glycol, polyethylene glycol, polypropylene glycol, and polytetramethylene glycol, alicyclic polyols such as 1,4-cylohexanedimethanol, 1,3-cylohexanedimethanol, 1,2-cylohexanedimethanol, tricyclodecane glycols, and hydrogenated bisphenols, trivalent and higher polyols such as trimethylolpropane, trimethylolethane, and pentaerythritol, and the like.

Of the polyhydric alcohol components described above, ethylene glycol, propylene glycol, neopentyl glycol, diethylene glycol, 1,4-butanediol, 1,4-cyclohexanedimethanol, and 2-methyl-1,3-propanediol can be suitably used in this embodiment as the component or components that constitutes or constitute the polyester resin or polyester resins. Especially from the viewpoint of flavor sorption resistance, it is desired that the percentage of at least one polyhydric alcohol, which is selected from ethylene glycol, propylene glycol, neopentyl glycol, 2-methyl-1,3-propanediol, and 1,4-cyclohexanedimethanol, in the polyhydric alcohol component that constitutes the polyester resin or polyester resins be 70 mol% or more, preferably 80 mol% or more, more preferably 90 mol% or more.

It is suited from the viewpoint of can making processability that the number average molecular weight (Mn) of the polyester resin falls in, but is not limited to, a range of preferably 1,000 to 100,000, especially preferably 3,000 to 50,000, still more preferably 5,000 to 20,000. A number average molecular weight of less than the above-described range may result in a brittle coating film, and may lead to inferior can making processability. On the other hand, a number average molecular weight of more than the above-described range may lead to a coating formulation of reduced stability.

Further, as the polyester resin, a noncrystalline polyester resin is preferred from the viewpoints of can making processability, dent resistance, and formulation into coating compositions. Here, the term "noncrystalline" means that the distinct melting point of a crystalline component is not indicated in measurement by a differential scanning calorimeter. In the case of a noncrystalline polyester resin, it has excellent solubility in solvents compared with a crystalline polyester resin, and therefore is easy in formulating a coating composition and can form a coating film excellent in can making processability and dent resistance.

The hydroxyl value of the polyester resin is, but is not limited to, 20 mg KOH/g or less, more preferably 10 mg KOH/g or less.

<Curing Agent>

A description will next be made about the curing agent for use in the coating composition of this embodiment. As the curing agent for use in this embodiment, a resol-type phenol resin and/or an amino resin can be suitably used from the viewpoints of hygiene and curability.

In this embodiment, the resol-type phenol resin is one obtained by reacting a phenol monomer and formaldehyde in the presence of an alkali catalyst. Examples of the phenol monomer include o-cresol, p-cresol, p-tert-butylphenol, p-ethylphenol, 2,3-xylenol, 2,5-xylenol, phenol, m-cresol, m-ethylphenol, 3,5-xylenol, m-methoxyphenol, and the like. They can be used singly or in combination. Of these, m-cresol is suited as the phenol monomer from the viewpoint of curability.

Also usable are those obtained by alkyl-etherifying (alkoxymethylating) some or all of the contained methylol groups with alcohols having carbon numbers of 1 to 12. In this embodiment, one obtained by alkyl-etherifying some or all of the contained methylol groups with an alcohol having a carbon number of 1 to 12 can be suitably used from points of reactivity and compatibility with the principal resin, with one obtained by alkyl-etherifying, with n-butanol, methylol groups of a resol-type phenol resin (m-cresol resol-type phenol resin) derived from m-cresol being particularly preferred.

Further, the number average molecular weight (Mn) of the above-described resol-type phenol resin is suitably in a range of 500 to 3,000, preferably 800 to 2,500.

As the amino resin in this embodiment, illustrative are methylolated amino resins obtained by reactions between amino components such as melamine, urea, benzoguanamine, acetoguanamine, steroguanamine, spiroguanamine, and dicyandiamide and aldehyde components such as formaldehyde, paraformaldehyde, acetoaldehyde, and benzaldehyde. Those obtained by alkyl-etherifying methylol groups of these methylolated amino resins with alcohols having carbon numbers of 1 to 6 are also included in the above-described amino resin. They can be used singly or in combination. From the viewpoint of hygiene, preferred are methylolated amino resins (melamine resins) using melamine and methylolated amino resins (benzoguanamine resins) using benzoguanamine.

As the benzoguanamine resins, preferred are benzoguanamine resins obtained by alkyl-etherifying some or all of the methylol groups of benzoguanamine resins with alcohols such as methanol, ethanol, n-butanol, and i-butanol, with methyl-etherified benzoguanamine resins obtained by etherifying with methyl alcohol, butyl-etherified benzoguanamine resins obtained by butyl-etherifying with butyl alcohol, or methyl ether-butyl ether mixed etherified benzoguanamine resins etherified with both methyl alcohol and butyl alcohol being particularly preferred. As the butyl alcohol described above, isobutyl alcohol or n-butyl alcohol are preferred.

As the melamine resins, preferred are melamine resins obtained by alkyl-etherifying some or all of the methylol groups of melamine resins with alcohols such as methanol, ethanol, n-butanol, and i-butanol, with methyl-etherified melamine resins obtained by etherifying with methyl alcohol, butyl-etherified melamine resins obtained by butyl-etherifying with butyl alcohol, or methyl ether-butyl ether mixed etherified melamine resins etherified with both methyl alcohol and butyl alcohol being particularly preferred.

In this embodiment, the content of the curing agent is 3 parts by mass or more, preferably 3 to 50 parts by mass, more preferably 4 to 30 parts by mass, still more preferably 6 to 20 parts by mass per 100 parts by mass of the polyester resin as the principal resin. If the content of the curing agent is less than the above-described range, curability is insufficient, so that, when a drawn and ironed can is formed, the coating film may be insufficient in heat resistance, retort resistance, contents resistance, corrosion resistance, and the like. Such a small content is therefore not preferred. If the content of the curing agent exceeds 50 parts by mass, curing proceeds excessively, thereby bringing about potential reductions in the can making processability and impact resistance of the coating film.

<Curing Catalyst>

A curing catalyst is blended in the coating composition of this embodiment to promote the crosslinking reaction between the principal resin and the curing agent. The curing catalyst can be an acid catalyst.

Described specifically, illustrative is an organic sulfonic acid-based and/or a phosphoric acid-based catalyst. Illustrative of the organic sulfonic acid-based catalyst are acid catalysts such as p-toluenesulfonic acid, dodecylbenzenesulfonic acid, dinonylnaphthalenedisulfonic acid, or their amine-neutralized products. As the phosphoric acid-based catalyst, on the other hand, phosphoric acid, alkylphosphoric acids, their amine-neutralized products, and the like can be used.

One of these curing agents can be used, or two or more of them can be used in combination. Among the acid catalysts described above, dodecylbenzenesulfonic acid and its amine-neutralized products are preferred.

The coating composition of this embodiment is characterized in that the content of the curing catalyst is 0.2 part by mass or less, preferably 0.1 part by mass or less, more preferably 0.03 to 0.1 part by mass, in terms of solids, per 100 parts by mass of the polyester resin as the principal resin. It is to be noted that, if the curing catalyst is the amine-neutralized product of the above-described acid catalyst (for example, an amine-neutralized product of dodecylbenzenesulfonic acid) in this embodiment, it is sufficient if the content of the acid catalyst except for the amine falls within the above-described range.

The following reason is given for this. Described specifically, the adhesion between a surface of a substrate (for example, aluminum) and a coating film in a coated metal sheet is considered to rely largely on the acid-base interaction between carboxyl groups contained in the polyester resin and the substrate. In principle, the more the carboxyl groups in the polyester resin (in other words, the higher the acid value of the polyester resin), substrate adhesion properties are considered to be higher accordingly. If the acid value of the polyester resin is higher than a predetermined numerical value, however, the coating film has a higher crosslink density, thereby posing a potential problem of insufficient can making processability.

In this embodiment, the content of the curing catalyst is therefore limited to the above-described range to impart sufficient substrate adhesion properties even in the case of use of a polyester resin that has a low acid value and tends to be low in substrate adhesion properties compared with those of a polyester resin having a high acid value.

Despite that the curability of a polyester resin is considered to decrease if the content of a curing catalyst is made low in a coating composition containing the resin and a curing agent, no particular attention has heretofore been paid to the blend percentage of the curing catalyst. In other words, the finding that the content of a curing catalyst affects factors other than curability was heretofore unknown among those skilled in the art.

In this embodiment, it has been confirmed that a coating film is provided with improved substrate adhesion properties if the content of an acid catalyst is made low in a coating composition containing the polyester resin and a curing agent.

As a reason for this, the present inventors postulated that an acid catalyst (for example, dodecylbenzenesulfonic acid) locally exists in a boundary between a coating film and a substrate (for example, aluminum) owing to the occurrence of acid-base interaction between the sulfo groups in the acid catalyst and the substate. The present inventors then postulated that, as a result, the adhesion between the polyester resin in the coating film and the substrate is reduced. It is to be noted that, even in the case that the curing catalyst is other than an organic sulfonic acid-based catalyst, the above-described postulations are valid if the acid catalyst is one (for example, a phosphoric acid-based acid catalyst) capable of inducing acid-base interaction with the substrate.

Based on the above-described postulations, the present inventors repeated experiments. As a result, it was found that, in a case in which the amount of a curing catalyst to be blended in a coating composition was varied, even a reduction of the content of the curing catalyst compared with conventional contents not only gives no adverse effect on the curability but also can bring about results of sufficient practical applicability with respect to the substrate adhesion properties.

In other words, it was found that, even if the acid value of a polyester resin is low (for example, even if the acid value is 2.0 mg KOH/g or less), reductions of substrate adhesion properties can be suppressed by setting the content of a curing catalyst at a predetermined value or less, thereby conceiving the present invention.

<Coating Composition>

The coating composition of this embodiment contains at least the above-mentioned specific polyester resin as the principal constituent (principal component), a resol-type phenol resin and/or an amino resin as the curing agent, a solvent, and an acid catalyst. It is to be noted that, in the coating composition of this embodiment, the component the content of which (percentage by mass) is the highest among solid components (non-volatile components other than volatile substances such as water and solvent) that will form a coating film is defined as a principal constituent (principal component).

As the type of the coating composition of this embodiment, illustrative are a solvent-based coating composition and an aqueous coating composition. In this embodiment, the solvent-based coating composition is preferred from the viewpoint of coating applicability or the like.

<Solvent>

If the coating composition of this embodiment is a solvent-based coating composition, it contains the above-mentioned polyester resin, curing agent, and acid catalyst, and as the solvent, an organic solvent. It is to be noted that the term "solvent-based coating composition" in this embodiment is one formulated into a coating composition with the principal resin, curing agent, and the like dissolved in a known organic solvent, and is defined to be a coating composition in which the mass percentage of the organic solvent is 40 mass% or more.

As the above-described organic solvent, one or more organic solvents are selected and used in view of solubility, evaporation rate, and the like from toluene, xylene, aromatic hydrocarbon compounds, ethyl acetate, butyl acetate, methyl ethyl ketone, methyl isobutyl ketone, cyclohexanone, isophorone, methyl cellosolve, butyl cellosolve, ethylene glycol monoethyl ether acetate, diethylene glycol monoethyl ether acetate, ethylene glycol monoacetate, methanol, ethanol, butanol, ethylene glycol monoethyl ether, ethylene glycol monobutyl ether, diethylene glycol monobutyl ether, solvent naphtha, and the like.

<Additives>

In the coating composition of this embodiment, known additives may also be contained to extent not impairing the objects of the present invention. For example, a lubricant, a pigment, a leveling agent, a defoaming agent, and the like may be contained. As lubricants that can be added to the coating composition of this embodiment, examples include, but are not particularly limited to, fatty acid ester waxes as esterified products of polyol compounds and fatty acids, silicon-based waxes, fluorinated waxes such as polytetrafluoroethylene, polyolefin waxes such as polyethylene, paraffin waxes, lanolin, montan wax, microcrystalline waxes, carnauba wax, silicon-containing compounds, vaseline, and the like. These lubricants can be used singly or in combination.

<Coated Metal Sheet>

A description will next be made about a coated metal sheet of this embodiment. The coated metal sheet of this embodiment has a coating film on at least one side, suitably a surface, which will serve as a can interior surface, of a metal sheet. More suitably, it is desired to have coating films on both sides of a metal sheet. The coating film can be formed by baking the above-mentioned coating composition with heating or the like after the coating composition is applied onto the metal sheet. Suitably, it is desired that the coating film be formed on a metal surface of the metal sheet (the coating film be formed in such a manner to remain in direct contact with the metal sheet). The coated metal sheet of this embodiment is a metal sheet that is suited for a drawn and ironed can.

As the metal sheet suited for use in the coated metal sheet of this embodiment, examples include a hot-rolled steel sheet, a cold-rolled steel sheet, a hot-dip zinc-coated steel sheet, an electrogalvanized steel sheet, an alloy plated steel sheet, an aluminum-zinc alloy plated steel sheet, an aluminum sheet, an aluminum alloy sheet, a tin-plated steel sheet, a stainless steel sheet, a copper sheet, a copper-plated steel sheet, a tin-free steel, a nickel-plated steel sheet, an ultrathin tin plated steel sheet, a chromium-treated steel sheet, and the like. Those obtained by applying various surface treatments such as phosphoric acid chromate treatment and zirconium phosphate treatment to these metal sheets may also be used.

As a forming method of the coating film in the coated metal sheet of this embodiment, the above-mentioned coating composition can be applied to the above-mentioned metal sheet by a known coating method such as roller coater coating or spray coating. A coating film can also be obtained by baking the coating composition with heating means such as a coil oven after its coating application.

Baking conditions for the coating composition are appropriately adjusted according to the kinds of the polyester resin, the curing agent, and the metal substrate, the coat weight, and the like. To achieve sufficient curing, the above-mentioned coating composition is heated and cured at a baking temperature of 150°C to 350°C, preferably higher than 200°C and 320°C or lower, under conditions of five seconds or longer, preferably five seconds to 30 minutes, particularly preferably five seconds to 180 seconds.

No particular limitation is imposed on the weight of the coating film. Preferably, however, the weight of the coating film is in a range of 300 mg/dm$^2$ or less, preferably 20 to 200 mg/dm$^2$, more preferably 30 to 150 mg/dm$^2$, still more preferably 40 to 140 mg/dm$^2$, in terms of the coat weight after drying and baking. The weight of the coating film is appropriately determined depending on the use of the coated metal sheet. The baking conditions for the coating film are appropriated adjusted according to the kinds of the solvent used and the metal substrate to be coated, the thicknesses of the coating film and the metal substrate to be coated, the coating speed, and the like.

In the coated metal sheet of this embodiment, the coating film is formed on the metal sheet as described above. The 180-degree peel strength between the metal sheet and the coating film is preferably 1 N/15 mm or more to withstand drawing and ironing processing.

<Drawn and Ironed Can>

By a conventionally known drawing and ironing method, a drawn and ironed can of this embodiment can be obtained using the above-mentioned coating composition and/or coated metal sheet. It is to be noted that the coated metal sheet of this invention is excellent in formability and lubricity, and therefore the drawn and ironed can can be formed even when its formation is performed under dry conditions without using a liquid coolant, to say nothing of the case that uses a liquid coolant.

Described specifically, the drawn and ironed can of this embodiment can be formed by such a manufacturing method as will be described below.

Preferably, a wax-based lubricant, for example, a paraffin-based wax, white petroleum, palm oil, various kinds of natural waxes, polyethylene wax, or the like is first applied to the surfaces of the coated metal sheet before drawing and ironing forming. In this manner, drawing and ironing processing can be efficiently performed under dry conditions.

On a cupping press, a blank is punched from the coated metal sheet with the wax-based lubricant applied thereto, followed by forming into a drawn cup by a drawing processing method. In this embodiment, the draw ratio RD defined by the below-described equation (2) desirably falls within a range of 1.1 to 2.6, particularly within a range of 1.4 to 2.6, in total (up to a drawn and ironed can). A draw ratio greater than the above-described range causes greater drawing wrinkles, leading to a potential problem that cracks may occur in the coating film to cause exposure of the metal.

$$RD = D/d \ ... \ (2)$$

in which D represents a blank diameter, and d represents a can body diameter.

The above-described drawn cup is next subjected to ironing processing in a single stage or several stages.

In this embodiment, the ironing ratio R represented by the below-described equation (3) desirably falls within a range of 25% to 80%, preferably 40% to 80%, more preferably 50% to 70%. An ironing ratio lower than the above-described range cannot achieve sufficient thinning of a side wall portion of a can body, and therefore is not fully satisfactory in economy. On the other hand, an ironing ratio higher than the above-described range involves a potential problem of exposure of the metal.

$$R \ (\%) = (tb - tw)/tb \times 100 \ ... \ (3)$$

in which tb represents the thickness of the original coated metal sheet, and tw represents the thickness of a central area of the side wall of the can body.

In the drawn and ironed can of this embodiment, it is also suited that the central area of the side wall of the can body (the most thinned area) has a thickness of 20% to 75%, preferably 20% to 60%, more preferably 30% to 50% of the thickness of a can base (central portion). If the drawn and ironed can is formed from the coated metal sheet by drawing and ironing processing, the thickness of the coating film located on the can body portion is thinned similarly to the metal substrate by the processing. The coating film on the central area of the side wall of the can body therefore suitably has a thickness of 20% to 75%, preferably 20% to 60%, more preferably 30% to 50% of the thickness of the coating film on the central portion of the can base, which remains substantially unthinned during can making.

The resulting drawn and ironed can is subjected to doming at the base portion and trimming at an opening end edge according to usual methods. If desired, the necking is subsequently applied in a single stage or a plurality of stages, followed by flanging to form a can for seaming. After the formation of the drawn and ironed can, the drawn and ironed can can be formed into a bottle shape by deforming its upper portion, or can be formed into another bottle shape by cutting off its base portion and attaching another can end.

Examples

A more detailed description will hereinafter be made using Examples, but the present invention should not be limited to the following Examples. It is to be noted that those simply referred to as "part" or "parts" in the Examples and Comparative Examples mean "part by mass" or "parts by mass."

(Example 1)

[Formulation of Interior Surface Coating Composition]

As the polyester resin (A), a polyester resin (A)-(a) (noncrystalline polyester resin, acid value: 2 mg KOH/g, Tg: 80°C, Mn = 18,000, monomer composition: terephthalic acid component/isophthalic acid component/ethylene glycol component/propylene glycol component = 38/12/18/33 mol%) was used; as the polyester resin (B), a polyester resin (B)-(a) (noncrystalline polyester resin, acid value: 22 mg KOH/g, Tg: 82°C, Mn = 6,000, monomer composition: terephthalic acid component/trimellitic acid component/ethylene glycol component/propylene glycol component = 49/1/12/38 mol%) was used; as the curing agent, a m-cresol resol-type phenol resin with methylol groups alkyl-etherified with n-butanol (percentage of etherified methylol groups: 90 mol%, Mn = 1,600) was used; and as the curing catalyst, dodecylbenzenesulfonic acid (amine-neutralized product) was used.

The polyester resin (A)-(a) and the polyester resin (B)-(a) were dissolved in a mixed solvent of methyl ethyl ketone/solvent naphtha = 50/50 (mass ratio), whereby a polyester resin (A)-(a) solution and a polyester resin (B)-(a) solution, both having a solid content of 30 mass%, were obtained. A solution (solid content: 50 mass%) of the resol-type phenol resin in n-butanol was diluted with methyl ethyl ketone, whereby a resol-type phenol resin solution having a solid content of 30 mass% was obtained. After dodecylbenzenesulfonic acid was amine-neutralized with 2-dimethylaminoethanol, the amine-neutralized product was dissolved in isopropanol, whereby an acid catalyst solution having a dodecylbenzenesulfonic acid solid content of 30 mass% was obtained.

A coating composition [solids concentration: approximately 30 mass%, solids blend ratio: polyester resin (A)-(a)/polyester resin (B)-(a)/curing agent/acid catalyst (dodecylbenzenesulfonic acid) = 90/10/10/0.2] was next formulated using 300 parts (solid content: 90 parts) of the polyester resin (A)-(a) solution, 33 parts (solid content: 10 parts) of the polyester resin (B)-(a) solution, 33 parts (solid content: 10 parts) of the resol-type phenol resin solution, and 0.66 part (acid catalyst solid content: 0.20 part) of the acid catalyst solution.

[Formulation of Exterior Surface Coating Composition]

As the polyester resin (A), the polyester resin (A)-(a) was used; as the polyester resin (B), the polyester resin (B)-(a) was used; as the curing agent, an amino resin (methyl-etherified melamine resin) was used; and as the curing catalyst, dodecylbenzenesulfonic acid (amine-neutralized product) was used.

Similar to the above-described formulation of the interior surface coating composition, a polyester resin (A)-(a) solution, a polyester resin (B)-(a) solution, and an acid catalyst solution of dodecylbenzenesulfonic acid, all having a solid content of 30 mass%, were obtained. The methyl-etherified melamine resin (solid content: 100 mass%) was diluted with methyl ethyl ketone, whereby a methyl-etherified melamine resin solution having a solid content of 30 mass% was obtained. A coating composition [solids concentration: approximately 30 mass%, solids blend ratio: polyester resin (A)-(a)/polyester resin (B)-(a)/curing agent/acid catalyst (dodecylbenzenesulfonic acid) = 90/10/6/0.2] was next formulated using 300 parts (solid content: 90 parts) of the polyester resin (A)-(a) solution, 33 parts (solid content: 10 parts) of the polyester resin (B)-(a) solution, 20 parts (solid content: 6 parts) of the methylated melamine resin solution, and 0.66 part (solid content: 0.20 part) of the acid catalyst solution.

It is to be noted that the below-described measurement items of each polyester resin followed the below-described methods.

(1) Measurement of number average molecular weight of polyester resin

Measured by gel permeation chromatography (GPC) using the calibration curve of standard polystyrene.

(2) Measurement of glass transition temperature

Measured at a ramp-up rate of 10°C/min using a differential scanning calorimeter (DSC).

(3) Measurement of acid value

Following the test procedures of the neutralization titration method specified in JIS 0070, 4 g of the polyester resin was dissolved in 20 mL of chloroform, followed by titration with a 0.1 N KOH ethanol solution to determine the resin acid value (mg KOH/g). As an indicator, phenolphthalein was used.

(4) Measurement of monomer composition

In 0.6 mL of deuterated chloroform, 30 mg of the solid of the polyester resin was dissolved, followed by $^1$H-NMR measurement to determine the monomer composition ratio from peak intensities. It is to be noted that the composition ratio was determined excepting very trace components (less than 1 mol% based on all the monomer components).

From the above-described interior surface coating composition and exterior surface coating composition, a coated metal sheet and drawn and ironed cans which used the coated metal sheet were prepared, and the below-mentioned individual evaluations were conducted.

(5) Preparation of coated metal sheet

Using as a metal sheet an aluminum sheet subjected to phosphoric acid chromate surface treatment (3104 alloy, thickness: 0.27 mm, weight of chromium in surface treatment film: 20 mg/m$^2$), the exterior surface coating composition was first applied to a surface which would be placed on a side of an exterior surface after formation, by a bar coater such that the weight of a coating film reached 40 mg/dm$^2$ after drying and baking, and drying was carried out at 120°C for 60 seconds. After that, the interior surface coating composition was applied to a surface which would be placed on a side of an interior surface on the opposite side, by a bar coater such that the weight of a coating film reached 90 mg/dm$^2$ after drying and baking, and baking was carried out at 250°C (interior oven temperature) for 30 seconds to prepare a coated metal sheet.

Evaluation of the coated metal sheet followed the below-described method.

(6) Evaluation of substrate adhesion properties (180-degree peel test)

From the coated metal sheet prepared as described above, a strip-shaped specimen 1 of 50 mm height and 30 mm width was cut out such that the rolling (grain elongation) direction of the metal substrate extended along long sides as illustrated in FIG. 1(a). At points apart by 7.5 mm from both ends of a surface for evaluation, scores 2 were formed with a utility knife substantially in parallel with a longitudinal direction and vertically at two positions from a distal end of the strip shape such that the scores reached the base material of a metal substrate m. The width between the scores 2 at the two positions was therefore calculated to be 15 mm. On a back side of the surface for evaluation, a score 3 was then formed at a position apart by 15 mm from a distal end of the long sides of the stripe shape such that the score 3 extended in parallel with a width direction (FIG. 1(b)). Using scissors for metal or a like instrument, cuts 6 were next formed along the scores 2 from a lower portion 5 of the specimen toward an upper portion 4 of the specimen until the cuts 6 reached the score 3 (FIG. 2). An end portion 1a of the specimen between the cuts 6 was folded, with end portions 1b on both sides of the cuts 6 left as they were, about the score 3 as a starting point such that a coating film 8 on the surface for evaluation is placed on an inner side, whereby the substrate m was cut in the width direction along the score 3 between only the scores 2 at the two positions. At that time, at a portion 7 for evaluation of peel strength, the coating film 8 on the surface for evaluation remained connected to the respective, cut and separated portions of the metal sheet without being cut off (FIG. 3(b)). On the other hand, a coating film 9 on a back surface had been cut along the score 3. Using a peel testing machine, a 180-degree peel test was performed at 23°C and a pull rate of 5 mm/min to measure the peel strength (180-degree peel strength).

As the peel strength when the coating film at the portion 7 for evaluation was evenly peeled by the 180-degree peel test, an average value in a region apart by 5 to 10 mm from a measurement starting portion (after 1 to 2 minutes from the start of the measurement) where the strength became stable was recorded.

Further, observation of the portion 7 for evaluation where the coating film 8 was forcedly peeled from the substrate m was visually conducted. If the coating film 8 at the portion 7 for evaluation was peeled in its entirety from the substate and the coating film 8 did not remain on the substrate m after the peeling, the coating film was evaluated to have undergone interfacial peeling. If the coating film 8 ruptured before its peeling from the substrate m, the coating film was evaluated to have undergone a cohesive failure.

The evaluation results are ranked as follows.

Excellent: Interfacial peeling and a peel strength of 5.0 N/15 mm or more, or a cohesive failure
Good: Interfacial peeling and a peel strength of less than 5.0 N/15 mm and 1.0 N/15 mm or more
Poor: Interfacial peeling and a peel strength of less than 1.0 N/15 mm

(7) Evaluation of curability of coating film (MEK extraction test)

A coated metal sheet with a coating film formed on the side of only an interior surface in a similar manner as described above was prepared, a specimen of 5 cm × 5 cm size was cut out from the thus-obtained coated metal sheet, and after measurement of the mass (W1) of the specimen, using 200 mL of MEK (methyl ethyl ketone), the specimen was immersed for one hour in boiling MEK (under reflux at 80°C), so that MEK extraction was carried out at the boiling point for one hour. After the extracted specimen was rinsed with MEK, the extracted specimen was dried at 120°C for one minute, and its mass (W2) was measured. Further, the coating film was de-coated with concentrated sulfuric acid by a decomposition method, and the mass (W3) of the specimen was measured. A MEK extraction rate which indicates the degree of cure of the coating film of the coated metal sheet is determined by the following equation (5).

$$\text{MEK extraction rate \%} = 100 \times (W1-W2)/(W1-W3) \ \ldots \ (5)$$

The evaluation results are ranked as follows.

Excellent: Less than 10%
Good: 10% or more and less than 20%
Fair: 20% or more and less than 30%
Poor: 30% or more

(8) Preparation of drawn and ironed can

After paraffin wax was applied to both sides of the coated metal sheet prepared in the manner described above, the coated metal sheet was punched into a circular shape of 142 mm diameter, and drawing processing was applied to prepare a shallow-drawn cup. To the shallow-drawn cup, redrawing, ironing (three stages), and doming were then applied under dry conditions, whereby a drawn and ironed can (can diameter: approximately 66 mm, height: approximately 130 mm, total draw ratio: 2.15, ironing ratio: 64%, thickness of central area of side wall of can body: 38.5% of the thickness of central portion of can base) was obtained.

(9) Evaluation of can making processability (ERV test of can body)

A metal exposed area was formed on the side of an exterior surface of the can base of the drawn and ironed can prepared by the method described above, the can body was connected to an anode of an enamel rater, 360 mL of 1% aqueous saline solution was poured into the can, a cathode of the enamel rater was immersed in the aqueous saline solution filled in the can, a voltage of 6.30 V was applied at room temperature for four seconds, and the current value (ERV) was then measured. In such measurement, a greater current flow indicates the existence of more defects in a coating film layer that is an insulator, and the exposure of more metal in an interior surface of a can.
The evaluation results are ranked as follows.

Excellent: Current value of less than 50 mA
Good: Current value of 50 mA or more and less than 100 mA
Fair: Current value of 100 mA or more and less than 300 mA
Poor: Current value of 300 mA or more

(10) Evaluation of adhesion properties during processing

An opening end of the drawn and ironed can prepared by the method described above was observed to make a visual observation about the degree of peeling of the coating film in a vicinity of the opening end, and the adhesion properties at the time of can making processing (adhesion properties during processing) were evaluated.
The evaluation results are as follows.

Good: Peeling of coating film was not found in the vicinity of opening end
Poor: Peeling of coating film was found in the vicinity of opening end

(11) Evaluation of flavor sorption resistance (flavor sorption test)

A specimen of 2.5 cm × 5.0 cm size was cut out centering around a position at a height of 8.0 cm from the can base of the drawn and ironed can prepared by the method described above, a coating film on the side of an exterior surface was ground with sand paper, and the specimen was rinsed and dried. As a model flavor test solution, a 5% ethanol aqueous solution containing 2 ppm of limonene was prepared. The model flavor test solution was placed in a glass bottle with a packing (Duran bottle), and the specimen was immersed, hermetically sealed, and stored at 30°C for two weeks. The specimen was taken out of the glass bottle, and after rinsed with water, water droplets were removed. The specimen was immersed in 50 mL of diethyl ether, hermetically sealed, and stored at room temperature for 24 hours. The extract was concentrated in a concentrator, and a GC-MS analysis (gas chromatography-mass spectroscopy) was conducted. From a component peak derived from limonene as obtained from the GC-MS analysis, the sorption amount was determined based on a calibration curve, and its percentage based on the charged amount of limonene was determined as a limonene sorption percentage (%) from the following equation (6).

Limonene sorption percentage (%) = sorption amount of limonene/charged amount of limonene × 100 ...        (6)

The evaluation results are ranked as follows.

Good: Limonene sorption percentage was less than 2%
Poor: Limonene sorption percentage was 2% or more

(Examples 2 to 13 and Comparative Examples 1 to 5)

The procedures and evaluations of Example 1 were similarly performed except that interior surface coating compositions were formulated by changing the kinds of the polyester resins, the kind of the curing agent, and the solid blend ratio as presented in Table 1. The results are presented in Table 1. It is to be noted that, as the polyester resin (A), a polyester resin (A)-(b) (noncrystalline polyester resin, acid value: 2 mg KOH/g, Tg: 84°C, Mn = 18,000, monomer composition: terephthalic acid component/ethylene glycol component/propylene glycol component = 50/14/36 mol%), a polyester resin (A)-(c) (noncrystalline polyester resin, acid value: 2 mg KOH/g, Tg: 65°C, Mn = 20,000, monomer composition: terephthalic acid component/isophthalic acid component/ethylene glycol component/neopentyl glycol component/diethylene glycol component = 25/25/22/27/1 mol%), and a polyester resin (A)-(d) (acid value: 3 mg KOH/g, Tg: 40°C, Mn = 15,000, monomer composition: terephthalic acid component/isophthalic acid component/sebacic acid component/ethylene glycol component/propylene glycol component/neopentyl glycol component/1,4-butanediol component = 25/20/5/16/14/3/17 mol%) were used in addition to the above-mentioned polyester resin, and as the polyester resin (B), a polyester resin (B)-(b) (noncrystalline polyester resin, acid value: 14 mg KOH/g, Tg: 55°C, Mn = 12,000), a polyester resin (B)-(c) (noncrystalline polyester resin, acid value: 36 mg KOH/g, Tg: 80°C, Mn = 5,000), a polyester resin (B)-(d) (noncrystalline polyester resin, acid value: 45 mg KOH/g, Tg: 46°C, Mn = 3,000), a polyester resin (B)-(e) (noncrystalline polyester resin, acid value: 12 mg KOH/g, Tg: 16°C, Mn = 11,000), and a polyester resin (B)-(f) (acid value: 11 mg KOH/g, Tg: -25°C, Mn = 17,000, monomer composition: terephthalic acid component/isophthalic acid component/sebacic acid component/1,4-butanediol component = 14/17/19/50 mol%) were used.
Further, as the curing agent, an amino resin (methyl-etherified benzoguanamine resin) was used in addition to the above-described resol-type phenol resin.

| | | Tg [°C] | Acid value [mgKOH/g] | Number average molecular weight | Example | | | | | | | | | | | | | Comparative Example | | | | |
|---|---|---|---|---|---|---|---|---|---|---|---|---|---|---|---|---|---|---|---|---|---|---|
| | | | | | 1 | 2 | 3 | 4 | 5 | 6 | 7 | 8 | 9 | 10 | 11 | 12 | 13 | 1 | 2 | 3 | 4 | 5 |
| Formulation of coating composition for interior surface — Polyester resin (A) | (A)–(a) | 80 | 2 | 18,000 | 90 | 70 | 50 | 30 | 90 | 70 | 90 | 70 | | | 90 | 90 | 90 | 100 | | 75 | 80 | |
| | (A)–(b) | 84 | 2 | 18,000 | | | | | | | | | 90 | | | | | | | | | |
| | (A)–(c) | 65 | 2 | 20,000 | | | | | | | | | | 90 | | | | | | | | |
| | (A)–(d) | 40 | 3 | 15,000 | | | | | | | | | | | | | | | | | | 90 |
| Polyester resin (B) | (B)–(a) | 82 | 22 | 6,000 | 10 | 30 | 50 | 70 | | | 10 | 30 | 10 | 10 | | | 10 | | 100 | | | 10 |
| | (B)–(b) | 55 | 14 | 12,000 | | | | | 10 | 30 | | | | | | | | | | | | |
| | (B)–(c) | 80 | 36 | 5,000 | | | | | | | | | | | 10 | | | | | | | |
| | (B)–(d) | 46 | 45 | 3,000 | | | | | | | | | | | | 10 | | | | | | |
| | (B)–(e) | 16 | 12 | 11,000 | | | | | | | | | | | | | | | | 25 | | |
| | (B)–(f) | -25 | 11 | 17,000 | | | | | | | | | | | | | | | | | 20 | |
| Characteristic values of polyester resin blend | AV_mix [mgKOH/g] | | | | 4.0 | 8.0 | 12.0 | 16.0 | 3.2 | 5.6 | 4.0 | 8.0 | 4.0 | 4.0 | 5.4 | 6.3 | 4.0 | 2.0 | 22.0 | 4.5 | 3.8 | 4.9 |
| | Tg_mix [°C] | | | | 80 | 81 | 81 | 81 | 77 | 72 | 80 | 81 | 84 | 67 | 80 | 76 | 80 | 80 | 82 | 61 | 52 | 44 |
| Curing agent | Resol-type phenol resin | | | | 10 | 10 | 10 | 10 | 10 | 10 | 20 | 5.5 | 10 | 10 | 10 | 10 | 80 | 10 | 10 | 10 | 10 | 10 |
| | Benzoguanamine resin | | | | | | | | | | | | | | | | 15 | | | | | |
| Curing catalyst | Dodecylbenzenesulfonic acid | | | | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| Evaluation | Substrate adhesion properties | | | | Excellent | Excellent | Excellent | Excellent | Good | Good | Good | Excellent | Excellent | Excellent | Excellent | Excellent | Excellent | Poor | Excellent | Excellent | Good | Excellent |
| | Curability | | | | Excellent | Good | Good | Good | Excellent | Excellent | Excellent | Fair | Excellent | Good | Good | Fair | Good | Excellent | Fair | Excellent | Excellent | Good |
| | Can making processability | | | | Excellent | Excellent | Good | Fair | Excellent | Excellent | Excellent | Excellent | Excellent | Excellent | Excellent | Fair | Good | Excellent | Poor | Excellent | Excellent | Excellent |
| | Adhesion properties during processing | | | | Good | Good | Good | Good | Good | Good | Good | Good | Good | Good | Good | Good | Good | Good | Good | Good | Good | Good |
| | Flavor sorption resistance | | | | Good | Good | Good | Good | Good | Good | Good | Good | Good | Good | Good | Good | Good | Good | Uneval'd | Poor | Poor | Poor |

(Example 14)

[Formulation of Interior Surface Coating Composition]

As the principal resin, a polyester resin (a) (noncrystalline polyester resin, acid value: 2 mg KOH/g, Tg: 80°C, Mn = 18,000, monomer composition: terephthalic acid component/isophthalic acid/ethylene glycol component/propylene glycol component = 38/12/17/33 mol%) was used; as the curing agent, a m-cresol resol-type phenol resin with methylol groups alkyl-etherified with n-butanol (percentage of etherified methylol groups: 90 mol%, Mn = 1,200) was used; and as the curing catalyst (acid catalyst), dodecylbenzenesulfonic acid (amine-neutralized product) was used.

The polyester resin (a) was dissolved in a mixed solvent of methyl ethyl ketone/solvent naphtha = 50/50 (mass ratio), whereby a polyester resin (a) solution having a solid content of 30 mass% was obtained. A solution (solid content: 50 mass%) of the resol-type phenol resin in n-butanol was diluted with methyl ethyl ketone, whereby a resol-type phenol resin solution having a solid content of 30 mass% was obtained. After dodecylbenzenesulfonic acid was amine-neutralized with 2-dimethylaminoethanol, the amine-neutralized product was dissolved in isopropanol, whereby an acid catalyst solution having a dodecylbenzenesulfonic acid solid content of 30 mass% was obtained.

A coating composition [solids concentration: approximately 30 mass%, solids blend ratio: polyester resin (a)/curing agent/acid catalyst (dodecylbenzenesulfonic acid) = 100/10/0.1 (mass ratio)] was next formulated using 333 parts (solid content: 100 parts) of the polyester resin (a) solution, 33 parts (solid content: 10 parts) of the resol-type phenol resin solution, and 0.33 part (solid content: 0.10 part) of the acid catalyst solution.

[Formulation of Exterior Surface Coating Composition]

As the polyester resin, the polyester resin (a) was used; and as the curing catalyst (acid catalyst), dodecylbenzenesulfonic acid (amine-neutralized product) was used.

Similarly to the above-described formulation of the interior surface coating composition, a polyester resin (a) solution and an acid catalyst solution of dodecylbenzenesulfonic acid, both having a solid content of 30 mass%, were obtained. The amino resin was diluted with methyl ethyl ketone, whereby an amino resin solution having a solid content of 30 mass% was obtained. A coating composition [solids concentration: approximately 30 mass%, solids blend ratio: polyester resin (a)/curing agent/acid catalyst (dodecylbenzenesulfonic acid) = 100/6/0.1 (mass ratio)] was next formulated using 333 parts (solid content: 100 parts) of the polyester resin (a) solution, 20 parts (solid content: 6 parts) of the amino resin solution, and 0.33 part (solid content: 0.10 part) of the acid catalyst solution.

The below-described measurement items of each polyester resin followed the below-described methods.

(1) Measurement of number average molecular weight of polyester resin

Measured by gel permeation chromatography (GPC) using the calibration curve of standard polystyrene.

(2) Measurement of glass transition temperature

Measured at a ramp-up rate of 10°C/min using a differential scanning calorimeter (DSC).

(3) Measurement of acid value

Following the test procedures of the neutralization titration method specified in JIS 0070, 4 g of the polyester resin was dissolved in 20 mL of chloroform, followed by titration with a 0.1 N KOH ethanol solution to determine the resin acid value (mg KOH/g). As an indicator, phenolphthalein was used.

(4) Measurement of monomer composition

In 0.6 mL of deuterated chloroform, 30 mg of the solid of the polyester resin was dissolved, followed by $^1$H-NMR measurement to determine the monomer composition ratio from peak intensities. It is to be noted that the composition ratio was determined excepting very trace components (less than 1 mol% based on all the monomer components).

From the above-described interior surface coating composition and exterior surface coating composition, a coated metal sheet and drawn and ironed cans which used the coated metal sheet were prepared, and the below-mentioned individual evaluations were conducted.

[Preparation of Coated Metal Sheet]

Using as a metal sheet an aluminum sheet subjected to phosphoric acid chromate surface treatment (3104 alloy, thickness: 0.27 mm, weight of chromium in surface treatment film: 20 mg/m$^2$), the exterior surface coating composition was first applied to a surface which would be placed on a side of an exterior surface after formation, by a bar coater such that the weight of a coating film reached 40 mg/dm$^2$ after drying and baking, and drying was carried out at 120°C for 60 seconds. After that, the interior surface coating composition was applied to a surface which would be placed on a side of an interior surface on the opposite side, by a bar coater such that the weight of a coating film reached 90 mg/dm$^2$ after drying and baking, and baking was carried out at 250°C (interior oven temperature) for 30 seconds to prepare a coated metal sheet.

Evaluation of the coated metal sheet followed the below-described method.

(5) Evaluation of substrate adhesion properties (180-degree peel test)

From the coated metal sheet prepared as described above, a strip-shaped specimen 1 of 50 mm height and 30 mm width was cut out such that the rolling (grain elongation) direction of the metal substrate extended along long sides as illustrated in FIG. 1(a). At points apart by 7.5 mm from both ends of a surface for evaluation, scores 2 were formed with a utility knife substantially in parallel with a longitudinal direction and vertically at two positions from a distal end of the strip shape such that the scores reached the base material of a metal substrate m. The width between the scores 2 at the two positions was therefore calculated to be 15 mm. On a back side of the surface for evaluation, a score 3 was then formed at a position apart by 15 mm from a distal end of the long sides of the stripe shape such that the score 3 extended in parallel with a width direction (FIG. 1(b)). Using scissors for metal or a like instrument, cuts 6 were next formed along the scores 2 from a lower portion 5 of the specimen toward an upper portion 4 of the specimen until the cuts 6 reached the score 3 (FIG. 2). An end portion 1a of the specimen between the cuts 6 was folded, with end portions 1b on both sides of the cuts 6 left as they were, about the score 3 as a starting point such that a coating film 8 on the surface for evaluation is placed on an inner side, whereby the substrate m was cut in the width direction along the score 3 between only the scores 2 at the two positions. At that time, at a portion 7 for evaluation of peel strength, the coating film 8 on the surface for evaluation remained connected to the respective, cut and separated portions of the metal sheet without being cut off (FIG. 3(b)). On the other hand, a coating film 9 on a back surface had been cut along the score 3. Using a tension tester ("AUTOGRAPH AG-ISJ," manufactured by SHIMADZU CORPORATION), a 180-degree peel test was performed at 23°C and a pull rate of 5 mm/min to measure the peel strength (180-degree peel strength).

As the peel strength when the coating film at the portion 7 for evaluation was evenly peeled by the 180-degree peel test, an average value in a region apart by 5 to 10 mm from a measurement starting portion (after one to two minutes from the start of the measurement), where the strength became stable, was recorded.

Observation of the portion 7 for evaluation where the coating film 8 was forcedly peeled from the substrate m was visually conducted. If the coating film 8 at the portion 7 for evaluation was peeled in its entirety from the substate and the coating film 8 did not remain on the substrate m after the peeling, the coating film was evaluated to have undergone interfacial peeling. If the coating film 8 had high adhesion properties with the substrate m and ruptured before its peeling from the substrate m, the coating film was evaluated to have undergone a cohesive failure.

The evaluation results are ranked as follows.

    Excellent: Interfacial peeling and a peel strength of 2.0 N/15 mm or more, or a cohesive failure
    Good: Interfacial peeling and a peel strength of 2.0 N/15 mm or less and 1.0 N/15 mm or more
    Fair: Interfacial peeling and a peel strength of 1.0 N/15 mm or less and 0.5 N/15 mm or more
    Poor: Interfacial peeling and a peel strength of less than 0.5 N/15 mm

(6) Evaluation of curability of coating film (MEK extraction test)

A coated metal sheet with a coating film formed on the side of only an interior surface in a similar manner as described above was prepared, a specimen of 5 cm × 5 cm size was cut out from the thus-obtained coated metal sheet, and after measurement of the mass (W1) of the specimen, using 200 mL of MEK (methyl ethyl ketone), the specimen was immersed for one hour in boiling MEK (under reflux at 80°C), so that MEK extraction was carried out at the boiling point for one hour. After the extracted specimen was rinsed with MEK, the extracted specimen was dried at 120°C for one minute, and its mass (W2) was measured. Further, the coating film was de-coated with concentrated sulfuric acid by a decomposition method, and the mass (W3) of the specimen was measured. A MEK extraction rate which indicates the degree of cure of the coating film of the coated metal sheet is determined by the following equation (5).

$$\text{MEK extraction rate \% } = 100 \times (W1-W2)/(W1-W3) \ldots$$

(5)

The evaluation results are ranked as follows.

Excellent: Less than 10%
Good: 10% or more and less than 20%
Fair: 20% or more and less than 30%
Poor: 30% or more

(7) Preparation of drawn and ironed can

After paraffin wax was applied to both sides of the coated metal sheet prepared in the manner described above, the coated metal sheet was punched into a circular shape of 142 mm diameter, and a shallow-drawn cup was prepared. To the shallow-drawn cup, redrawing, ironing (three stages), and doming were then applied under dry conditions, whereby a drawn and ironed can (can diameter: 66 mm, height: approximately 130 mm, total draw ratio: 2.15, ironing ratio: 64%, thickness of central area of side wall of can body: 38.5% of the thickness of central portion of can base) was obtained.

(8) Evaluation of can making processability (ERV test of can body)

A metal exposed area was formed on the side of an exterior surface of the can base of the drawn and ironed can prepared by the method described above, the can body was connected to an anode of an enamel rater, 360 mL of 1% aqueous saline solution was poured into the can, a cathode of the enamel rater was immersed in the aqueous saline solution filled in the can, a voltage of 6.30 V was applied at room temperature for four seconds, and the current value was then measured. In such measurement, a greater current flow indicates the existence of more defects in a coating film layer that is an insulator, and the exposure of more metal in an interior surface of a can.
The evaluation results are ranked as follows.

Excellent: Current value of less than 50 mA
Good: Current value of 50 mA or more and less than 100 mA
Fair: Current value of 100 mA or more and less than 300 mA
Poor: Current value of 300 mA or more

(9) Evaluation of adhesion properties during processing

An opening end of the drawn and ironed can prepared by the method described above was observed to make a visual observation about the degree of peeling of a coating film in a vicinity of the opening end, and the adhesion properties at the time of can making processing (adhesion properties during processing) were evaluated.
The evaluation results are ranked as follows.

Good: Peeling of coating film was not found in the vicinity of opening end
Poor: Peeling of coating film was found in the vicinity of opening end

(10) Evaluation of flavor sorption resistance (flavor sorption test)

A specimen of 2.5 cm $\times$ 5 cm size was cut out centering around a position at a height of 8.0 cm from the can base of the drawn and ironed can prepared by the method described above, a coating film on the side of an exterior surface was ground with sand paper, and the specimen was rinsed and dried. As a model flavor test solution, a 5% ethanol aqueous solution containing 2 ppm of limonene was prepared. The model flavor test solution was placed in a glass bottle with a packing (Duran bottle), and the specimen was immersed, hermetically sealed, and stored at 30°C for two weeks. The specimen was taken out of the glass bottle, and after rinsed with water, water droplets were removed. The specimen was immersed in 50 mL of diethyl ether, hermetically sealed, and stored at room temperature for 24 hours. The extract was concentrated in a concentrator, and a GC-MS analysis (gas chromatography-mass spectroscopy) was conducted. From a component peak derived from limonene as obtained from the GC-MS analysis, the sorption amount was determined based on a calibration curve, and its percentage based on the charged amount of limonene was determined as a limonene sorption percentage (%) from the following equation (6).

Limonene sorption percentage (%) = sorption amount of limonene/charged amount of limonene $\times$ 100 ...          (6)

The evaluation results are ranked as follows.

Good: Limonene sorption percentage was less than 2%
Poor: Limonene sorption percentage was 2% or more

(Examples 15 to 22 and Comparative Examples 6 to 8)

The procedures and evaluations of Example 14 were similarly performed except that interior surface coating compositions were formulated by changing the kind of the polyester resin, the solid blend ratio, and the acid catalyst conditions as presented in Table 2. The results are presented in Table 2. It is to be noted that, as the polyester resin, a polyester resin (b) (noncrystalline polyester resin, acid value: 22 mg KOH/g, Tg: 82°C, Mn = 6,000, monomer composition: terephthalic acid component/trimellitic acid component/ethylene glycol component/propylene glycol component = 49/1/12/38 mol%), a polyester resin (c) (acid value: 2 mg KOH/g, Tg: 84°C, Mn = 18,000, monomer composition: terephthalic acid component/ethylene glycol component/propylene glycol component = 50/14/36 mol%), a polyester resin (d) (acid value: 11 mg KOH/g, Tg: -25°C, Mn = 17,000, monomer composition: terephthalic acid component/isophthalic acid component/sebacic acid component/1,4-butanediol component = 14/17/19/50 mol%), and a polyester resin (e) (acid value: 3 mg KOH/g, Tg: 40°C, Mn = 15,000, monomer composition: terephthalic acid component/isophthalic acid component/sebacic acid component/ethylene glycol component/propylene glycol component/neopentyl glycol component/1,4-butanediol component = 25/20/5/16/14/3/17 mol%) were used in addition to the above-mentioned polyester resin.

[Table 2]

| | | Tg [°C] | Acid value [mgKOH/g] | Number average molecular weight | Example | | | | | | | | | Comparative Example | | |
|---|---|---|---|---|---|---|---|---|---|---|---|---|---|---|---|---|
| | | | | | 14 | 15 | 16 | 17 | 18 | 19 | 20 | 21 | 22 | 6 | 7 | 8 |
| Formulation of coating composition for interior surface | Polyester resin (a) | 80 | 2 | 18,000 | 100 | 90 | 70 | 50 | 30 | | 100 | 100 | 94 | 100 | 80 | |
| | Polyester resin (b) | 82 | 22 | 6,000 | | 10 | 30 | 50 | 70 | | | | | | | |
| | Polyester resin (c) | 84 | 2 | 18,000 | | | | | | 100 | | | | | | |
| | Polyester resin (d) | -25 | 11 | 17,000 | | | | | | | | | 6 | | 20 | |
| | Polyester resin (e) | 40 | 3 | 15,000 | | | | | | | | | | | | 100 |
| | Characteric values of polyester resin blend | $AV_{mix}$ [mgKOH/g] | | | 2.0 | 4.0 | 8.0 | 12.0 | 16.0 | 2.0 | 2.0 | 2.0 | 2.5 | 2.0 | 3.8 | 3.0 |
| | | $Tg_{mix}$ [°C] | | | 80 | 80 | 81 | 81 | 81 | 84 | 80 | 80 | 71 | 80 | 52 | 40 |
| | Curing agent | Resol-type phenol resin | | | 10 | 10 | 10 | 10 | 10 | 10 | 15 | 20 | 10 | 10 | 10 | 10 |
| | Curing catalyst | Dodecylbenzenesulfonic acid | | | 0.1 | 0.1 | 0.1 | 0.1 | 0.1 | 0.1 | 0.1 | 0.1 | 0.1 | 0.3 | 0.1 | 0.1 |
| Evaluation | Substrate adhesion properties | | | | Good | Excellent | Excellent | Excellent | Excellent | Good | Good | Good | Excellent | Poor | Excellent | Excellent |
| | Curability | | | | Excellent | Excellent | Good | Good | Good | Excellent | Excellent | Excellent | Excellent | Excellent | Excellent | Excellent |
| | Can making processability | | | | Excellent | Excellent | Excellent | Good | Fair | Excellent | Excellent | Excellent | Excellent | Good | Excellent | Excellent |
| | Adhesion properties during processing | | | | Good | Good | Good | Good | Good | Good | Good | Good | Good | Poor | Good | Good |
| | Flavor sorption resistance | | | | Good | Good | Good | Good | Good | Good | Good | Good | Good | Good | Poor | Poor |

It is evident that a coated metal sheet using each coating composition of the present invention and a drawn and ironed can using the coated metal sheet have can making processability, substrate adhesion properties, and flavor sorption resistance all together.

[Industrial Applicability]

The present invention can be suitably used in the field of metal processing where consideration is paid to the environment while maintaining a high level of processability.

[Reference Signs List]

1: Specimen
1a: End portion
1b: End portion
2: Score
3: Score
4: Upper portion of specimen
5: Lower portion of specimen
6: Cut
7: Portion for evaluation
8: Coating film (surface for evaluation)
9: Coating film

The present invention also includes the following embodiments:

A. A coating composition comprising:
a polyester resin blend as a principal resin, the polyester resin blend containing (A) a polyester resin having a glass transition temperature of higher than 40°C and an acid value of less than 10 mg KOH/g and (B) a polyester resin having a glass transition temperature of higher than 40°C and an acid value of 10 mg KOH/g or more and less than 50 mg KOH/g, and (C) a curing agent.

B. The coating composition according to embodiment A, wherein an average acid value of the polyester resin blend is more than 2.0 mg KOH/g and less than 16.0 mg KOH/g.

C. The coating composition according to embodiment A or B, wherein a glass transition temperature of the polyester resin blend is 50°C to 120°C.

D. The coating composition according to any of embodiments A to C, wherein, in the polyester resin blend, a blend ratio of the polyester resin (A)/the polyester resin (B) is 30/70 to 99/1 in terms of a solid content mass ratio.

E. The coating composition according to any of embodiments A to D, wherein the curing agent (C) is a resol-type phenol resin.

F. The coating composition according to any of embodiments A to E, wherein a content of the curing agent (C) is 5.5 parts by mass or more per 100 parts by mass of the principal resin (polyester resin blend).

G. The coating composition according to any of embodiments A to F, wherein a number average molecular weight of the polyester resin (A) is 13,000 or more, and a number average molecular weight of the polyester resin (B) is less than 13,000.

H. A coating composition comprising:
a polyester resin, as a principal resin, having a glass transition temperature of 60°C or higher, a resol-type phenol resin and/or an amino resin as a curing agent, and an organic sulfonic acid-based catalyst and/or a phosphoric acid-based catalyst as a curing catalyst,
wherein a content of the curing catalyst is 0.2 part by mass or less per 100 parts by mass of the principal resin.

I. The coating composition according to embodiment H, wherein a content of the curing catalyst is 0.1 part by mass or less per 100 parts by mass of the principal resin.

J. The coating composition according to embodiment H or I, wherein an acid value of the principal resin is less than 20 mg KOH/g.

K. The coating composition according to any one of embodiments H to J, wherein a content of the curing agent is 4 to 30 parts by mass per 100 parts by mass of the principal resin.

L. The coating composition according to any of embodiments A to K, wherein the coating composition is a solvent-based coating composition.

M. A coated metal sheet comprising:
on at least one side of a metal sheet, a coating film formed from the coating composition according to any of embodiments A to L.

N. A coated metal sheet for a drawn and ironed can, comprising:
on a metal surface of at least one side of a metal sheet, a coating film formed from the coating composition according to any one of embodiments A to L.

O. The coated metal sheet according to embodiment N, wherein a 180-degree peel strength of the coating film is 1 N/15 mm or more.

P. A drawn and ironed can obtained by subjecting the coated metal sheet according to embodiment M to drawing and ironing processing.

Q. A drawn and ironed can comprising:
the coated metal sheet according to embodiment N or O.

R. The drawn and ironed can according to embodiment P or Q, wherein a thickness of the coating film on a central area of an interior surface and/or an exterior surface of a side wall of a can body is 20% to 75% of a thickness of the coating film on a can base portion.

S. A manufacturing method of a drawn and ironed can, comprising:
subjecting the coated metal sheet according to embodiment M, N, or O to drawing and ironing processing at an ironing ratio of 25% to 80%.

**Claims**

1. A coating composition comprising:

   a polyester resin, as a principal resin, having a glass transition temperature of 60°C or higher, a resol-type phenol resin and/or an amino resin as a curing agent, and an organic sulfonic acid-based catalyst and/or a phosphoric acid-based catalyst as a curing catalyst,
   wherein a content of the curing catalyst is 0.2 part by mass or less per 100 parts by mass of the principal resin.

2. The coating composition according to claim 1, wherein a content of the curing catalyst is 0.1 part by mass or less per 100 parts by mass of the principal resin.

3. The coating composition according to claim 1 or 2, wherein an acid value of the principal resin is less than 20 mg KOH/g.

4. The coating composition according to any one of claims 1 to 3, wherein a content of the curing agent is 4 to 30 parts by mass per 100 parts by mass of the principal resin.

5. The coating composition according to any of claims 1 to 4, wherein the coating composition is a solvent-based coating composition.

**6.** A coated metal sheet comprising:
on at least one side of a metal sheet, a coating film formed from the coating composition according to any of claims 1 to 5.

**7.** A coated metal sheet for a drawn and ironed can, comprising:
on a metal surface of at least one side of a metal sheet, a coating film formed from the coating composition according to any one of claims 1 to 5.

**8.** The coated metal sheet according to claim 7, wherein a 180-degree peel strength of the coating film is 1 N/15 mm or more.

**9.** A drawn and ironed can obtained by subjecting the coated metal sheet according to claim 6 to drawing and ironing processing.

**10.** A drawn and ironed can comprising:
the coated metal sheet according to claim 7 or 8.

**11.** The drawn and ironed can according to claim 9 or 10, wherein a thickness of the coating film on a central area of an interior surface and/or an exterior surface of a side wall of a can body is 20% to 75% of a thickness of the coating film on a can base portion.

**12.** A manufacturing method of a drawn and ironed can, comprising:
subjecting the coated metal sheet according to claim 6, 7, or 8 to drawing and ironing processing at an ironing ratio of 25% to 80%.

FIG. 1

(a) SURFACE FOR EVALUATION

(b) BACK SURFACE

FIG. 2

SURFACE FOR EVALUATION

FIG. 3

(a) SURFACE FOR EVALUATION          (b) BACK SURFACE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3872998 B

- JP 4091266 B